# EUROPÄISCHE PATENTSCHRIFT

(11) **EP 0 664 079 B1**
(45) Veröffentlichungstag und Bekanntmachung des Hinweises auf die Patenterteilung: **21.10.1998**
(21) Anmeldenummer: 95250009.8
(22) Anmeldetag: 18.01.1995
(51) Int. Cl.: A01M 29/02, G10K 9/13

(54) **Erfindung zur Abschreckung von tierischen Schädlingen durch Aussendung eines Ultraschallsignals**
Device for frightening noxious animals by emitting ultrasonic signals
Dispositif pour effrayer les animaux nuisibles par emission de signaux ultrasoniques

(30) Priorität: 19.01.1994 DE 4402013
(43) Veröffentlichungstag der Anmeldung: 26.07.1995
(73) Patentinhaber: Lang, Karen M., 94035 Creteil cedex (FR); Lang, Oliver, 10715 Berlin (DE)
(72) Erfinder: Lang, Oliver, D-10777 Berlin (DE)

(56) Entgegenhaltungen:
- EP-A- 0 129 415
- DE-A- 3 443 568
- GB-A- 2 231 999
- US-A- 4 105 992

## Beschreibung

Die Erfindung bezieht sich auf eine Einrichtung zur Abschreckung von tierischen Schädlingen durch Aussendung eines Ultraschallsignals, das eine Struktur aus einzelnen Tonsequenzen aufweist, mit
- einem programmgesteuerten Mikrocomputer zur Berechnung des Ultraschallsignals unter zufallsbeeinflußter Auswahl der berücksichtigten, mindestens vorgegebenen Signalparameter Tonfrequenz und Pausenlänge zwischen einzelnen Tonsequenzen,
- einem Digital-Analogwandler,
- einem Analogverstärker,
- zumindest einem Piezo-Ultraschallwandler,
- einer Programmreset-Einrichtung und mit
- einer Kontroll-Einrichtung zur Funktionsprüfung durch Übertragung des Ultraschallsignals in den für Menschen hörbaren Bereich.

Auf dem weiten Gebiet der Schädlingsbekämpfung werden zunehmend Einrichtungen mit einer vertreibenden Wirkung denen mit einer vernichtenden Wirkung gegenüber - speziell für größere Einsatzfälle - bevorzugt. Sichergestellt muß dabei jedoch die andauernde Wirksamkeit des angewendeten Vertreibungsmodus sein. Fortschreitende Erkenntnisse über das Verhalten von tierischen Schädlingen, insbesondere solchen mit hoher Intelligenz, wie beispielsweise Ratten, haben dazu geführt, daß die Methode der Vertreibung mit einem für Menschen nicht hörbaren Ultraschallsignal, das zur Vermeidung eines Gewöhnungs- oder sogar Anlockungseffekts für die Schädlinge zufallsbeeinflußt von einem Mikrocomputer variiert wird, entwickelt und durch angepaßte Bedienfunktionen immer einsatzsicherer wurde.

Eine nach dieser Methode arbeitende, wie oben beschriebene Einrichtung ist aus der DE-OS 34 43 568 A1 bekannt. Hierbei enthält ein Festspeicher ein fertiges Anwenderprogramm mit vorgegebenen Werten für die Signalparameter Tonfrequenz, Pausenlänge und Schalldruck. Die Strukturierung des zu erzeugenden Ultraschallsignals wird ebenfalls programmgesteuert durch die zufallsbeeinflußte Auswahl eines oder mehrerer Signalparameter bewirkt. Der verwendete Mikrocomputer, der über eine Taktfrequenz oberhalb der erforderlichen Frequenzen des zu erzeugenden Ultraschallsignals verfügt, weist eine umfangreiche Zusatzelektronik zur Erzeugung von elektronischen Schwingungen mittels eines frequenzvariablen Oszillators auf. Zur Zusatzelektronik gehören zwei Digital-Analogwandler, die die Steuerdaten für Tonhöhe, -länge und -lautstärke an den Analogverstärker geben. Das Ausgangssignal der Zusatzelektronik wird einem einzelnen Piezo-Ultraschallwandler mit einem zur Normalen orientierten Abstrahlbereich zugeführt. Die Programmreset-Einrichtung erzeugt einen Rücksetzimpuls beim Anschließen der Einrichtung an die Stromversorgung, um dabei auftretende Störeinflüsse in der Versorgung zu überbrücken. Die Kontroll-Einrichtung wird durch einen Umschalter manuell aktiviert und auch wieder ausgeschaltet. Die Einrichtung umfaßt als Einheit den Mikrocomputer und den Piezo-Ultraschallwandler Bei Einsatz mehrerer Einrichtungen stehen diese funktional nicht miteinander in Verbindung.

Langjährige Wirksamkeitskontrollen von Installationen aus derartigen Einrichtungen haben ergeben, das die eingangs genannte Bedingung der andauernden Wirksamkeit nicht immer ausreichend gegeben ist. Nach der Inbetriebnahme war in bestimmten Fällen im Wirkungsgebiet ein sich relativ schnell einstellender Neubefall durch Nager in einer Stärke wie vor der Vertreibung zu registrieren. Insbesondere wurde die Unwirksamkeit an besonders stark beschallten (über 107 dB) Stellen festgestellt. Labormessungen haben ergeben, daß weniger der Schalldruck als vielmehr die abgestrahlte Frequenzbreite des erzeugten Ultraschallsignals dessen Wirksamkeit wesentlich beeinflußt. Einen vertreibenden Effekt haben insbesondere Ultraschallsignale mit einem hohen Obertonanteil (i.a. bis 80 kHz), da die ausgestoßenen Laute von hyperaktiven Tieren in insbesondere aggresiven Streßsituationen einen solchen Obertonanteil aufweisen. Ultraschallsignale in niedrigeren Frequenzgebieten, speziell unter 20 kHz, können von Nagern mit einer höheren Intelligenz je nach ihrer biologischen Motivation relativ schnell überwunden oder umgangen (Aufsuchen von schallarmen Zonen, Durchbeißen von Kabeln) werden. Bei der Realisierung derart breitbandiger Frequenzbereiche erweist sich aber der Einsatz bekannter Piezo-Ultraschallwandler wegen deren geringer Bandbreite als problematisch. Für den Schalldruck wurde eine optimale Wirksamkeit bei ca. 100 dB in 1 m axialer Entfernung vom Sender festgestellt. Die Abstrahlung des Ultraschallsignals sollte dabei so breit wie möglich erfolgen, um einen großen räumlichen Wirkungsbereich zu erzielen.

Die biologische Motivation zur Überwindung der ausgesendeten Ultraschallsignale ist von unterschiedlichen Aspekten abhängig. Zunächst ist die Schädlingsart und ihre Population, sowie deren Struktur bedeutend. Weiterhin spielen Fragen des befallenen Territoriums, seiner Beschaffenheit und seines Nahrungsangebots eine Rolle. Schließlich sind zeitliche Veränderungen und Einflüsse, wie Jahres-, Paarungs- und Wurfzeiten, zu berücksichtigen. Alle diese Aspekte machen eine ständige bedienerfreundliche Anpaßbarkeit des zu erzeugenden Ultraschallsignals erforderlich. Der Bediener muß für eine optimale Wirksamkeit einer Einrichtung der oben genannten Art den notwendigen Regelkreis zwischen dem erzeugten Ultraschallsignal und dessen Wirkung mit einfachen Mitteln durch Anpassung aller einflußbehafteten Signalparameter dauerhaft schließen können. Dabei sind auch wirtschaftliche Aspekte sowohl in der Ausführung der Einrichtung als auch bei deren Herstellung zu berücksichtigen.

Derartige Anforderungen können von der erfindungsgemäßen Einrichtung dadurch erfüllt werden, daß
- als weitere Signalparameter des Ultraschallsignals die jeweilige Tonlänge TL, die einzelne Tonsequenzlänge SL, der Strukturparameter SP, der sich aus der Differenz zwischen einer maximalen Tonlänge und einer minimalen Tonlänge einer Tonsequenz errechnet, und der Zufallsmodus bereichsweise vorgegeben sind,
- die Vorgabe der Signalparameter-Bereiche durch programminterne Berücksichtigung von externen Instruktionen aus einer einstellbaren ProgrammierSchaltereinheit erfolgt,
- das vom Mikrocomputer berechnete Ultraschallsignal programmintern in ein Rechteck-Ausgangssignal umgeformt und direkt dem Analog-Verstärker zugeführt wird,
- der Analog-Verstärker einen schnellen Operationsverstärker aufweist, der die Basen zweier komplementärer Transistoren in Emitterschaltung treibt und über diese rückgekoppelt ist,
- zwischen dem Analogverstärker (15) und dem Piezo-Ultraschallwandler (20,40) ein Frequenzfilter (19) angeordnet ist und daß
- der Piezo-Ultraschallwandler (20,40) als Schwingungssystem (41) einen piezokeramischen Dickenschwinger in Form einer kreisrunden Piezoscheibe (42) mit einem oberseitig zentral aufgeklebten trichterförmigen Konus (43) aus einem wasserfesten, oxidbeschichteten Papier aufweist, der eine Halsöffnung (44) mit einem Durchmesser d1 in einem Bereich von 2 bis 4 mm, eine Mundöffnung (46) mit einem Durchmesser d2 in einem Bereich von 10 bis 14 mm und einen Mantel (45) mit einer Länge L in einem Bereich von 5 bis 7 mm hat.

Eine Einrichtung mit diesen kennzeichnenden Merkmalen stellt die konsequente, technisch elegante Verwirklichung der aus den oben erwähnten Laboruntersuchungen resultierenden Erkenntnissen und Anforderungen dar. Dabei bezieht sich die Erfindung im wesentlichen auf die Einzelkomponenten Software, Mikrocomputer, Hardwareperipherie und Piezo-Ultraschallwandler.

Auf dem Gebiet der Software, die kopiersicher in einem Festwertspeicher abgelegt ist, bedeutet die Erweiterung der vorgegebenen Signalparameter, die gezielt nach den wissenschaftlichen Erkenntnissen erfolgt ist, eine gegenüber dem Stand der Technik wesentlich verbesserte Anpaßmöglichkeit an den individuell zu vertreibenden Schädlingstyp. Publikationen über die Aufstellung von Hörbereichen, Lautemissionen und sozialen Verhaltensweisen von verschiedenen tierischen Schädlingen können bei der Anpassung neben dem einfachen Austesten sehr hilfreich sein. Diese Publikationen wurden unter anderem bereits bei der Erstellung der Parameterbreiche herangezogen, so daß dem Anwender bei der Anpassungswahl schon eine erste Orientierung gegeben ist. Weiterhin wird durch die Berücksichtigung der Signalparameter Strukturparameter und Zufallsmodus die Möglichkeit gegeben, jeden Gewöhnungseffekt dauerhaft zu vermeiden. Ausgehend von den Erkenntnissen, daß ein strukturiertes Störsignal, das heißt ein Signal, das ständig nur stellenweise verändert wird, als besonders unangenehm empfunden wird (z.B. Klavierübungen), erweist sich die Möglichkeit einer gezielten Strukturierung und Veränderung ihres Grades durch Wahl des Zufallsmodus, d.h. durch Wahl der vom Zufallsalgorithmus verwendeten Zahlenfolge in Verbindung mit einem konstant gehaltenen Signalparameter oder eines daraus abgeleiteten Strukturparameters als besonders wirkungsvoll.

Da die beschriebene Anpaßbarkeit nur vom Anwender vor Ort vorgenommen werden kann, wird ihm durch die einstellbare Programmier-Schaltereinheit ein äußerst einfaches Bedienmittel für die Anpassung zur Verfügung gestellt. Programmierarbeiten werden vom Anwender nicht verlangt, obwohl er über die verschiedenen Schalterstellungen direkt in die Software eingreifen kann.

Aus dem Prospekt "Ihr unentbehrlicher, kompetenter Partner zur umweltfreundlichen Schädlingsbekämpfung mit Ultrasonic" der Firma Dekur Electronic-Geräte GmbH, Koblenz, 1991, ist zwar eine Einrichtung "Dekur 6000" bekannt, bei der die Signalparameter Tonfrequenz, Pausenlänge und Schalldruck über die Einstellung von mechanischen Schaltern bereichsweise eingestellt werden können. Bei dem erzeugten Ultraschallsignal handelt es sich jedoch um einen Alarmton einer einzigen Frequenz bis maximal 30 kHz, der in veränderbarer Länge und Lautstärke von einem intgrierten Schaltkreis erzeugt und über einen Lautsprecher ausgesendet wird.

Somit arbeitet diese Gerät nach einem ganz anderen Prinzip als die Einrichtung nach der Erfindung.
Der Mikrocomputer selbst ist ein serienmäßig hergestelltes Bauteil ohne Zusatzelektronik und daher äußerst preiswert. Die Zusatzelektronik ist nicht erforderlich, weil die Taktfrequenz des Mikrocomputers selbst dazu benutzt wird, das Rechteck-Ausgangssignal für den Analogverstärker mit einer von Frequenz und Betriebsspannung U_{B} unabhängigen Amplitude zu generieren. Dies erfolgt intern softwaremäßig über eine Timer-Interrupt-Steuerung. Deshalb ist nur ein einzelner Digital-Analogwandler vor dem Analogverstärker erforderlich, der für die Anpassung der Steuerdaten an die Signalparameterbereiche sorgt und damit störende Knackgeräusche bei der Aussendung des Ultraschallsignals verhindert. Es kann deshalb ein einfacher 3 bit-Wandler eingesetzt werden, der direkt an den Port-Pins des Mikrocomputers angeschlossen ist. Digital-Analogwandler und Analogverstärker sind Teil der Hardwareperipherie.

Das Obertonspektrum bei rechteckförmigen Signalen setzt sich aus der Grundwelle sowie deren ungeradzahligen Vielfachen zusammen. Bei Signalen mit einem Tastverhältnis (Verhältnis der Einperiode zur Ausperiode) ungleich 50% kommen je nach Asymmetrie noch geradzahlige Vielfache hinzu, dabei nimmt die Amplitude der Grundwelle mit wachsender Asymmetrie ab. Bei einer Abflachung der Flanken eines Rechtecksignals geht dieses zunehmend in ein Dreieck- bzw. Sinussignal über, hierbei nehmen jedoch die Amplituden der Oberwellen stark ab. Der beste Kompromiß zwischen einer hohen Gesamtintensität des abzustrahlenden Ultraschallsignals bei einer gegebenen Betriebsspannung U_{B} und einem hohen Anteil an Obertönen wird durch das verwendete Rechtecksignal mit einem Tastverhältnis von nahezu 50% erzielt. Deshalb ist der Analogverstärker nach der Erfindung als Leistungsverstärker so aufgebaut, daß er eine hohe Anstiegsteilheit aufweist. Die Rechteckignale werden verzerrungsfrei verstärkt, so daß das erforderliche Obertonspektrum nicht eingeschränkt wird. Weiterhin dient der Leistungsverstärker, insbesondere durch die Verwendung von Darlington-Transistoren, der Herabsetzung der hohen Ausgangsimpedanz des Ein-Ausgabe-Bausteins des Mikrocomputers auf wenige Ohm, so daß die Ausgangsamplitude U_{SS} unabhängig von der Anzahl der angeschlossen Piezo-Ultraschallwandler ist.

Bei der Erfindung ist zwischen dem Analogverstärker und dem Piezo-Ultraschallwandler ein Frequenzfilter angeordnet. Insbesondere kann es sich hierbei um ein LCR-Glied handeln, das als Hochpaß dient und dessen untere Grenzfrequenz etwas unterhalb der niedrigsten Ultraschallfrequenz (ca. 20 bis 25 kHz) liegt. Damit werden zum einen Frequenzen unterhalb dieser Grenzfrequenz mit nahezu 12 dB pro Oktave gedämpft, so daß Störgeräusche im menschlichen Hörbereich unterdrückt werden. Dies ist umso wichtiger, da Töne in diesem Bereich mit Schalldrücken oberhalb 100 dB die zulässigen Lärmschutzbestimmungen verletzen. Zum anderen ergibt sich eine Resonanzüberhöhung im Bereich von ca. 20 bis 35 kHz mit einer daraus resultierenden Zunahme des Schalldrucks in diesem Bereich. Weiterhin bewirkt das LCR-Glied eine Deformation der Rechteck-Wellenform im Bereich der Resonanzüberhöhung in Richtung eines sägezahnförmigen Signals, welches mit einem noch höheren Anteil an Obertönen, speziell geradzahligen Vielfachen der Grundwelle, behaftet ist.

Mit dem Piezo-Ultraschallwandler nach der Erfindung werden die Forderungen aus der Forschung optimal erfüllt. Ein derartiger Wandler verfügt über eine hohe Frequenzbandbreite von ca. 10 bis 130 kHz mit einer maximalen Schallpegelleistung zwischen 20 und 80 kHz bei einem mittleren Schalldruck von 95 dB/m (Schwankungsbreite ca. +/-6 dB). Durch einen hohen Wirkungsgrad in diesem Frequenzbereich (Quotient aus Schallpegelleistung und zugeführter elektrischer Leistung) wird der Leistungsverbrauch gering gehalten. Der große Frequenzbereich ermöglicht die Abstrahlung von Frequenzen, die als Obertöne der von der Elektronik erzeugten Rechteck-Ultraschallsignale auftreten und von Ratten und anderen Schädlingen als aggressiv wahrgenommen werden. Die Materialien der Konstruktion und deren Verklebung gewährleisten einen guten Widerstand gegenüber äußeren Einflüssen, wie Temperatur und Feuchtigkeit. Durch seine Konstruktion verfügt der Piezo-Ultraschallwandler über eine geringe Direktivität. Der Wandler ist damit insgesamt gesehen trotz seiner guten Leistungseigenschaften einfach, robust und unempfindlich. Deshalb kann sein Einsatz auch in jeder anderen Einrichtung, bei der eine elektroakustische Wandlung in einem breiten Frequenzband benötigt wird, von großem Vorteil und Nutzen sein.

Ein verbessertes Frequenzspektrum wird erreicht, wenn erfindungsgemäß das Schwingungssystem in einem ringförmigen Gehäuse durch Verklebungen mit der Bodenplatte des Gehäuses dämpfungsarm aufgehängt ist. Eine zusätzliche Glättung des Frequenzganges kann nach der Erfindung durch eine zumindest annähernd ovale Ausführung des Konus bewirkt werden. Der Abstrahlbereich kann noch weiter vergrößert werden, wenn erfindungsgemäß das Ausgangssignal des Analogverstärkers parallel zwei Piezo-Ultraschallwandlern zugeführt wird, die direkt nebeneinander mit einem Öffnungswinkel zueinander von ca. 20° in der horizontalen Ebene angeordnet sind. Gleichzeitg können mit dieser Anordnung Schalldrücke von nahezu 100 dB/m erreicht werden, die sich in ihrer Vertreibungswirkung als optimal erwiesen haben.

Die Stromversorgung der erfindungsgemäßen Einrichtung erfolgt i.a. über ein Steckernetzteil mit 15 bis 20 V Gleichspannung. Eine netzunabhängige Versorgung über Akkumulatoren ist auch möglich. Der Mikrocomputer wird mit einer stabilisierten 5 V-Spannung versorgt. Um Schwankungen im Versorgungsnetz, gerade auch während des Betriebes und nicht nur bei der Inbetriebnahme der Einrichtung, kompensieren zu können, reagiert nach einer weiteren vorteilhaften Ausgestaltung der erfindungsgemäßen Einrichtung die Programmreset-Einrichtung auf jede auftretende Versorgungsstörung für den Mikrocomputer automatisch. Dadurch werden Ausfälle der Einrichtung auch bei kurzen Bursts im Netz sicher vermieden. Von einer elektronischen Reset-Schaltung wird ein ausreichend langer Reset-Impuls generiert, der das Computerprogramm unter Rücksetzung aller Zähler neu startet (Hardware-Reset). Beim Neustart werden automatisch alle über die programmierbare Schaltereinheit vorgegebenen Signalparameter übernommen. Ein Rücksetzen des Programms ist auch manuell über Betätigung der Entertaste, die ebenfalls zu der Schaltereinheit gehört, möglich. Dadurch kann das Programm zu beliebigen Zeitpunkten, insbesondere nach einer Neueinstellung der Parameter, neu gestartet werden (Software-Reset).

Durch Betätigung der Entertaste kann auch die Kontroll-Einrichtung aktiviert werden, wenn gemäß einer weiteren Ausgestaltung der Erfindung die Kontrolleinrichtung programmgesteuert aktiviert werden kann. Zusätzliche Schalter entfallen. Der besondere Vorteil ist darin zu sehen, daß eine Funktionskontrolle durch Übertragung des erzeugten Ultraschallsignals in den hörbaren Bereich automatisch abgerufen wird, wenn der Anwender nach Neueingabe von Parameterwerten diese durch Betätigen der Entertaste in das Programm übergeben will. Da erfindungsgemäß die Übertragung automatisch nach Ablauf einer Zeitspanne wieder aufgehoben wird, bedeutet dies zusätzlichen Bedienkomfort für den Anwender. Im Prinzip muß er sich im Normalfall um die Funktionskontrolle nicht mehr bemühen, sie wird ihm automatisch angeboten.

Ob die Einrichtung in Betrieb ist und Ultraschallsignale aussendet, kann vom Anwender ohne weiteres ständig kontrolliert werden, wenn erfindungsgemäß die Kontroll-Einrichtung optische Kontrollmittel aufweist. Insbesondere kann es sich hierbei um Leuchtdioden handeln, die entweder dauerhaft als reine Betriebsanzeige oder im Takt des Ultraschallsignals blinkend aufleuchten. Es ist auch möglich, daß die Leuchtdioden die einzige Kontroll-Einrichtung bilden, was an sich bekannt ist (Dekur-Prospekt).

Nach einer anderen vorteilhaften Weiterbildung der erfindungsgemäßen Einrichtung ist diese als Zentralstation in einem Gehäuse angeordnet, das ein ausgewölbtes Metallgitter an der Vorderseite, einen integrierten Montagebügel und seitlich herausgeführte Ausgangs-Steckverbinder sowie einen abgewinkelten Netzteilstecker an der Rückseite aufweist. Durch das ausgewölbte Metallgitter wird auch die seitliche Schallabstrahlung nicht behindert. Der Beschallungsbereich wird nochmals erweitert. Der integrierte Montagebügel ermöglicht eine leichte Anbringung der Einrichtung an Wänden o.ä. Die Verbinder sind steckbar und damit leicht betätig- und austauschbar. Die anderen Maßnahmen dienen einer besonders flachen Montagelage an den Wänden. Gerade bei Räumen mit beispielsweise Lagerregalen ist diese Platzeinsparung von Bedeutung. Die Ausbildung der Einrichtung als Zentralstation beeinhaltet alle wesentlichen Funktionselemente, die Montage der Station sollte daher in einem einseh- und begehbaren Bereich erfolgen.

Erfindungsgemäß können weitere Piezo-Ultraschallwandler in von der Zentralstation jeweils räumlich getrennt angeordneten Satellitengehäusen mit ähnlichem Gehäuseaufbau vorgesehen sein. Die Satellitengehäuse sind dann etwas kleiner als das Zentralgehäuse. Allgemein ist ein solcher Aufbau, allerdings mit einer festgelegten Anzahl von Satelliten (4 oder 6), ebenfalls aus dem Dekur-Prospekt bekannt. Bei der Erfindung ist jedoch durch die weiter oben erwähnte Herabsetzung der Ausgangsimpedanz des Ein-Ausgabebausteins durch den Leistungsverstärker, der kurzschlußfest und gekühlt ist, sowie durch den niedrigen Leistungsverbrauch des Piezo-Ultraschallwandlers ohne weiteres der parallele Anschluß mehrerer Satelliten (max. bis zu 20) ohne deutliche Verminderung der Ausgangsamplitude U_{SS} möglich. Eine Festlegung auf eine bestimmte Satellitenanzahl wegen einer Resonanzkreisabstimmung besteht nicht. Durch den Einsatz der Zentralstation mit nur einem Mikrocomputer werden zusätzlich nur die Piezo-Ultraschallwandler für die Satelliten benötigt, was eine erhebliche Kosteneinsparung bedeutet.

Bei sehr großen zu beschallenden Gebieten kann es von Vorteil sein, mehrere Einrichtungen zu installieren. Dadurch entfallen lange Verbindungskabel zu den Satelliten, bzw. es sind beliebig viele Satelliten einsetzbar. Dann ist es besonders vorteilhaft, wenn nach einer weiteren Erfindungsausgestaltung die einzelnen Ultraschallsignale US zueinander desynchronisiert werden können durch eine programmgesteuerte, von der Programmreset-Einrichtung ausgelöste zeitliche Verzögerung der jeweiligen zufallsbeeinflußten Wahl der Signalparameter. Erreicht wird die Desynchronisation durch ein Zurücksetzen der einzelnen Zufallsgeneratoren bei einem Reset auf unterschiedliche Zählplätze. Die Wirksamkeit der Schädlingsvertreibung - gerade bei intelligenten Nagern - wird durch diese beabsichtigte Durchmischung der einzelnen Ultraschallsignale in Form eines zusätzlichen Verwirrungseffektes noch erhöht. Wenn darüberhinaus erfindungsgemäß der Desynchronisationsgrad D als weiterer Parameter über die Programmier-Schaltereinheit einstellbar ist, kann der Anwender seine gesamte Anlage an die bestehenden Verhältnisse anpassen. Beispielsweise kann der Desynchronisationsgrad D in 4 Stufen angeboten werden. Welcher der optimale ist, kann der Anwender selbst einfach austesten.

Die beschriebene erfindungsgemäße Einrichtung zur Abschreckung von tierischen Schädlingen garantiert nach den Erkenntnissen jahrelanger Forschung eine anhaltende Vertreibungswirkung bei optimaler Anpaßbarkeit an die gegebenen Verhältnisse. Damit eignet sich die Einrichtung für die Anwendung in Betrieben mit Lebensmittelverarbeitung und/oder Lagerhaltung. Es kann aber auch von Interesse sein, eine einfachere Version der Einrichtung zu konzipieren. Dies gilt insbesondere für ärmere Regionen mit großen Schädlingsplagen unter gleichbleibenden Bedingungen, wo die optimale Anpaßbarkeit und Unauffälligkeit nicht im Vordergrund stehen. Auch im privaten Anwendungsbereich spielt der Kostenfaktor eine Rolle. Deshalb ist auch eine Einfachversion der erfindungsgemäßen Einrichtung möglich, welche durch geringere Material- und Fertigungskosten einen niedrigeren Verkaufspreis zuläßt. Die Vereinfachungen betreffen aber nur den Hardwarebereich, die Software bleibt unverändert. Mögliche Vereinfachungen sind beispielsweise feste Lötbrücken anstelle der Programmierschalter, eine vereinfachte Endstufenschaltung für den Anschluß von maximal zwei Satelliten, eine ausschließlich optische Funktionskontrolle, ein einziger Piezo-Ultraschallwandler der erfindungsgemäßen Konstruktion oder Ersatz von Spezialteilen wie Netzteil, Gehäuse oder Ausgangsbuchsen durch einfachere Produkte. Trotz dieser Vereinfachungen, die den Komfort für den Anwender einschränken, bleibt aber die hohe, anhaltende Wirksamkeit der Einrichtung bestehen.

Im folgenden soll anhand der Erläuterung einiger schematischer Figuren die erfindungsgemäße Einrichtung zur Abschreckung von tierischen Schädlingen durch Aussendung eines Ultraschallsignals noch weiter verdeutlicht werden. Es zeigt im einzelnen :
- Figur 1 : ein Diagramm mit der zeitlichen Abfolge eines generierten Ultraschallsignals,
- Figur 2 : ein Diagramm zur Definition des Strukturparameters,
- Figur 3 : das Blockschaltbild der Hardware der erfindungsgemäßen Einrichtung,
- Figur 4 : das Schaltungsprinzip des Leistungsverstärkers,
- Figur 5 : den konstruktiven Aufbau des Piezo-Ultraschallwandlers in der geschnittenen Seitenansicht und
- Figur 6 : den konstruktiven Aufbau des Piezo-Ultraschallwandlers in der Draufsicht.

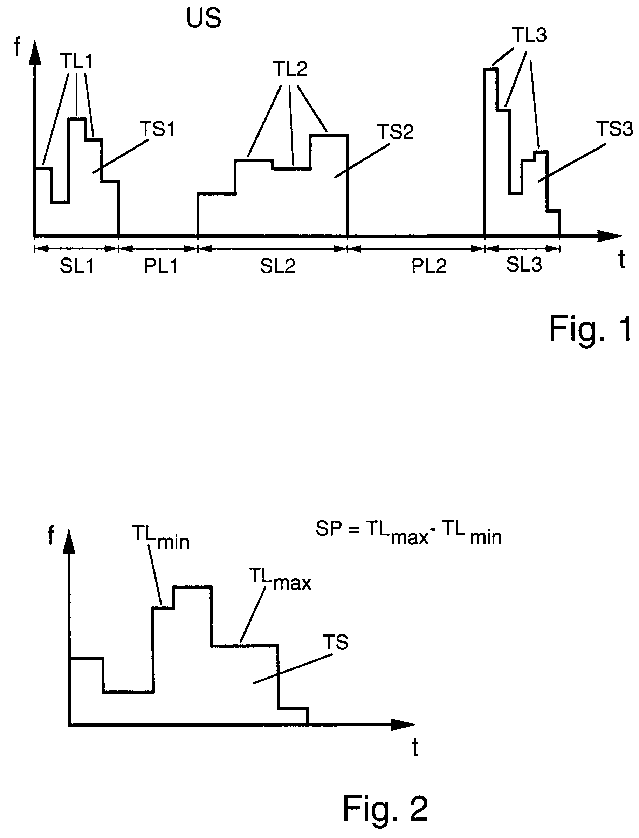

In **Figur 1** ist ein Diagramm gezeigt, bei dem über der Zeitachse t der Verlauf der Frequenz f eines generierten Ultraschallsignals US aufgetragen ist. Dargestellt sind drei einzelne Tonsequenzen TS1, TS2 und TS3. Die erste Tonsequenz TS1 besteht aus fünf einzelnen Tönen unterschiedlicher Frequenz f mit jeweils einer konstanten Tonlänge TL1. Damit ergibt sich eine erste Sequenzlänge SL1 von fünf TL1. Nach einer ersten Pausenlänge PL1 folgt die zweite Tonsequenz TS2 mit einer Sequenzlänge SL2, die sich zusammensetzt aus vier Einzeltönen der konstanten Tonlänge TL2. Nach einer zweiten Pausenlänge PL2 folgt dann die dritte Tonsequenz TS3. Bei dieser setzt sich die Sequenzlänge SL3 aus sechs Einzeltönen der jeweiligen Tonlänge TL3 zusammen. Bei dem dargestellten Ultraschallsignal US ergibt sich damit eine Strukturierung durch Beibehaltung einer konstanten Tonlänge TL innerhalb einer Tonsequenz TS.

Dieser beschriebene Aufbau eines strukturierten Ultraschallsignals US aus einzelnen Tonsequenzen TS, die aus Tönen verschiedener Frequenz f, aber jeweils gleicher Tonlänge TL bestehen und die mit unterschiedlichen Pausenlängen PL aufeinander folgen, ist beliebig fortsetzbar. Auch wenn sich zwei aufeinanderfolgende Tonsequenzen TS in ihrer Anzahl der Einzeltöne und deren Tonlängen TL erheblich unterscheiden, so wird doch durch die Konstanthaltung der Tonlänge TL innerhalb einer Tonsequenz TS für die zu vertreibenden Schädlinge der Eindruck einer willkürlichen Lautäußerung erzielt, vergleichbar mit der Informationsübermittlung eines intelligenten Lebewesens. Der Verlauf des Ultraschallsignals US hängt zum einen von den vom Anwender vorgegebenen Signalparametern ab. Zum anderen wird ihr Aufbau durch den Algorithmus des Zufallsgenerators bestimmt. Bei der Erfindung wird ein zeitlich getakteter Zufallsgenerator benutzt, der eine festgelegte Folge von Zahlenwerten mit schrittweise erhöhten Permutationen abfragt und den Signalparametern im vorgegebenen Bereich zuordnet. So wird zusätzlich ein mehr oder weniger starker Zusammenhang zwischen aufeinanderfolgenden Werten, d.h. eine weitere Strukturierung des Ultraschallsignals erreicht. Die Wiederholungsrate des Zufallsgenerators liegt jedoch bei mehreren 10⁴ Werten, so daß andererseits ein Gewöhnungseffekt sicher verhindert wird. Der Grad der Strukturierung durch die Zufallsverarbeitung ist durch eine unterschiedliche Vorgabe der Folgen von Zahlenwerten (Wahl des Parameters Zufallsmodus), beispielsweise von eng bis weit aufeinanderfolgenden Werten, zusätzlich beeinflußbar.

In **Figur 2** wird anhand eines Diagrammes, in dem wiederum der zeitliche Frequenzverlauf f über t eines Ultraschallsignals US dargestellt ist, eine erweiterte Möglichkeit der Variation der Strukturierung verdeutlicht. Diese wird mit Hilfe eines Strukturparameters SP erreicht, der sich aus der Differenz zwischen einer maximalen Tonlänge TLₘₐₓ und einer minimalen Tonlänge TLₘᵢₙ einer Tonsequenz TS berechnet. Die Vorgabe eines hohen Wertes für den Strukturparameter SP bedeutet, daß innerhalb einer Tonsequenz TS Töne auftreten, die sich in ihrer Tonlänge TL wesentlich unterscheiden. Wird dagegen ein kleiner Wert vorgegeben, weisen die Töne einer Tonsequenz TS ähnliche Tonlängen TL auf, und die erreichte Strukturierung nähert sich der zuerst beschriebenen mit konstanten Tonlängen TL.

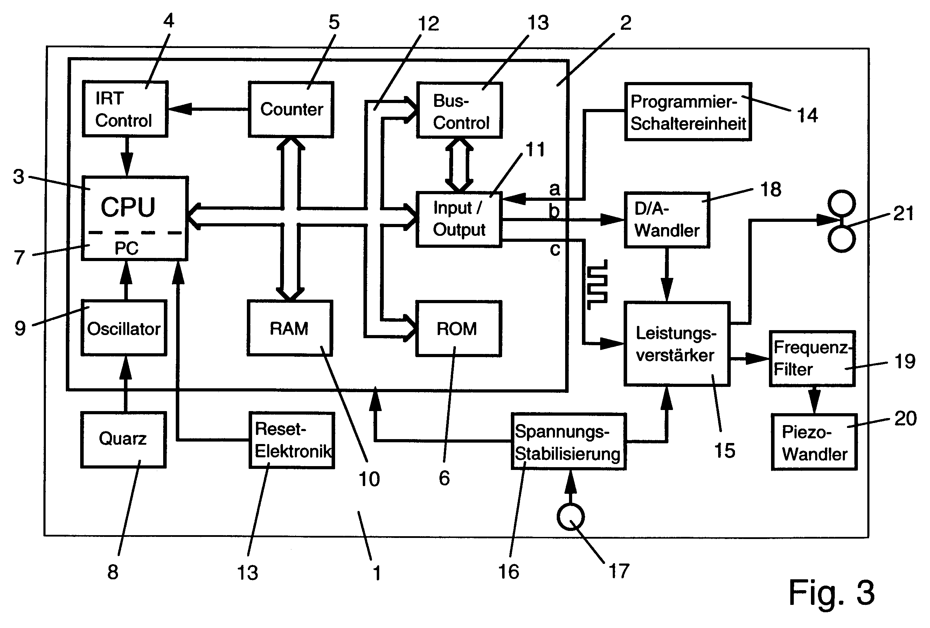

Der Stukturparameter SP und die weiteren genannten Signalparameter können über eine Programmier-Schaltereinheit (siehe Figur 3) vom Anwender direkt dem Computerprogramm mitgeteilt werden. Die Vorgabe erfolgt bereichsweise. Aufgrund von Erfahrungen aus der Praxis wird bei der Erfindung für den Signalparameter Frequenz eine realisierbare Bandbreite von 25 bis 65 kHz angeboten, die in verschiedene wählbare Unterbereiche mit einer Bandbreite von ca. 20 kHz unterteilt ist. Beispielsweise kann über einen Programmier-Schalter für die Frequenz f in eingeschalteter Position ein Frequenzbereich zwischen 29 und 48 kHz und in ausgeschalteter Position ein Frequenzbereich zwischen 34 und 63 kHz vom Anwender vorgegeben werden. Über einen anderen Programmierschalter kann zwischen einer Pausenlänge PL im Bereich 5 bis 20 s oder einer Pausenlänge PL im Bereich 15 bis 60 s gewählt werden. Diese Bereiche sind ebenfalls praxisorientiert, wobei sich eine Tendenz zu kürzeren Pausenlängen ergeben hat.

Die **Figur 3** zeigt das Blockschaltbild der erfindungsgemäßen Einrichtung 1. Das Herz bildet eine Mikrocomputer-Einheit 2. Dort werden Rechtecksignale generiert, deren Frequenz f und Amplitude in einem Mikrocomputer 3 errechnet werden. Dabei wird er von einer Timer-Interrupt-Baustein 4, der mit einem Zählerbaustein 5 verbunden ist, gesteuert. Die im Mikrocomputer 3 abgearbeiteten Befehle sind in einem Festwertspeicher 6 (ROM) gespeichert und werden schrittweise unter Erhöhung eines Programmzählers 7, der seinen Takt von einem über einen Quarz 8 angeregten Oszillator 9 erhält, an den Mikrocomputer 3 ausgegeben. Die auswählbaren Signalparameter sind in einem Schreib-Lesespeicher 10 abgelegt. Die Ein- und Ausgabe von Daten (Schalterstellungen Port a, Steuersignale Port b, Rechtecksignale Port c) erfolgt an einem Ein-Ausgabe-Baustein 11 über Port-Pins. Dabei wird die Richtung des Datenflusses in einem Datenbus 12 von einem Bus-Controller 13 gesteuert. Für eine sichere Rücksetzung des Programmzählers 7 beim Einschalten und bei kurzen Unterbrechungen der Betriebsspannung sorgt eine automatische Reset-Einrichtung 13 durch Erzeugung eines ausreichend langen Reset-Impulses.

Die Beeinflussung des Programms, insbesondere der dort vorgenommenen Berechnungen der Signalparameter Frequenz f, Tonlänge TL, Sequenzlänge SL und Pausenlänge PL sowie der Parameter Strukturparameter SP und Desynchronisation D, erfolgt über eine Programmier-Schaltereinheit 14, die in festen Zeitabständen oder bei einem Reset vom Mikrocomputer 3 abgefragt wird.

Die in der Mikrocomputer-Einheit 2 erzeugten Rechtecksignale stehen am Port c des Ein-Ausgabe-Bausteins 11 mit einer von der Frequenz f und der Betriebsspannung U_{B} unabhängigen Amplitude zur Verfügung. Sie werden direkt einem Analogverstärker 15 (insbesondere ein Leistungsverstärker) zugeführt, der genau wie die Mikrocomputer-Einheit 2 die von einem Spannungsstabilisator 16 stabilisierte Betriebsspannung UB erhält. Der Spannungsstabilisator 16 ist über eine Netzadapterbuchse 17 mit dem Stromnetz (oder einer anderen Energiequelle) verbunden. Weiterhin werden über den Port b Steuersignale an einen Digital-Analogwandler 18 geleitet, die dafür sorgen, daß die Spannungsverstärkung des Analogverstärkers 15 so verändert wird, daß sich an dessen Ausgang konstant eine Spannungsamplitude U_{SS} zwischen 0 und annähernd U_{B} ergibt. Die Ausgangssignale des Analogverstärkers 15 werden über ein Frequenzfilter 19 (Hochpaß) einem Piezo-Ultraschallwandler 20 zugeführt, der das berechnete Ultraschallsignal US aussendet. Der Analogverstärker 15 verfügt außerdem über weitere Ausgangsbuchsen 21, an die im Bedarfsfall weitere Piezo-Ultraschallwandler 20 angeschlossen werden können.

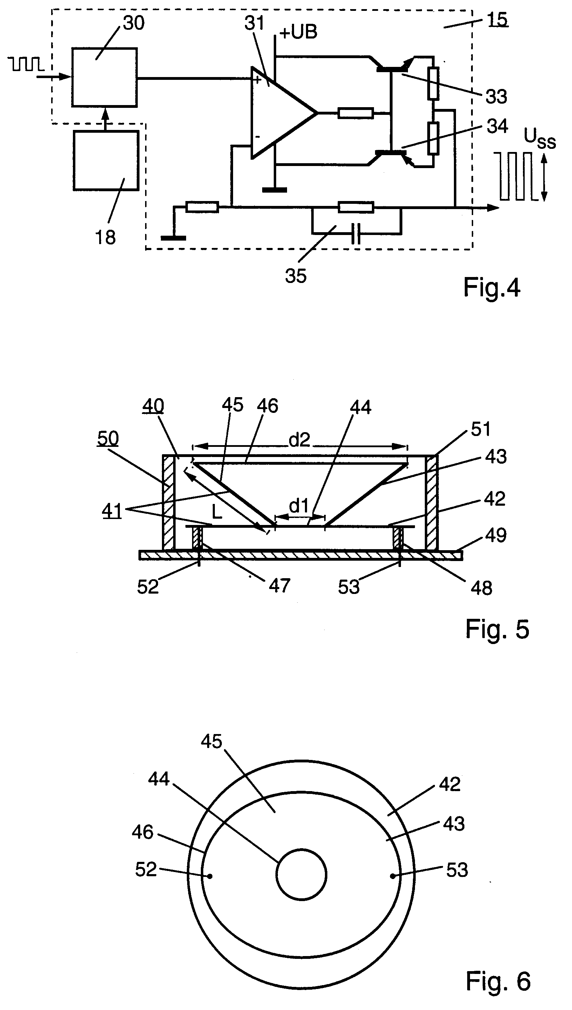

Der **Figur 4** ist die Prinzipschaltung des Analogverstärkers 15 der erfindungsgemäßen Einrichtung 1 zu entnehmen (nicht erwähnte Bezugszeichen siehe Figur 3). Hierbei handelt es sich um einen Leistungsverstärker mit einer hohen Anstiegssteilheit von 20 V/µs bei einer maximalen Betriebsspannung U_{Bmax} von 30 V. Dieser weist an seinem Eingang einen spannungsgesteuerten Vorverstärker 30 auf, auf den die Rechtecksignale und die digital-analoggewandelten Steuerdaten geleitet werden. Die entsprechend der Steuerung vorverstärkten Rechtecksignale werden dann auf den positiven Eingang eines schnellen Operationsverstärkers 31 gegeben, der auch mit der Betriebsspannung U_{B} versorgt wird. Dieser treibt direkt die Basen zweier komplementärer Darlington-Leistungstransistoren 33,34, die ebenfalls die Betriebsspannung U_{B} erhalten. Der Operationsverstärker 30 ist über ein Rückkopplungsglied 35 an seinem negativen Eingang auf eine maximale Spannungverstärkung von ca. 20 dB bei Maximalwert des Digital-Analogwandlers 18 eingestellt. Der maximal entnehmbare Strom beträgt je nach Ausführung der Transistoren 0,5 bis 2 A. Das Ausgangssignal des Leistungsverstärkers 15 ist das unverzerrte Rechtecksignal mit einer konstant hohen Spannungamplitude U_{SS}.

Die Figuren 5 und 6 zeigen den konstruktiven Aufbau eines Piezo-Ultraschallwandlers 40 mit einem Schwingungssystem 41 nach der Erfindung. In der geschnittenen Seitenansicht in **Figur 5** ist ein piezo-keramischer Dickenschwinger in Form einer kreisrunden Piezoscheibe 42 mit einem Durchmesser von ca. 15 mm und einer Dicke von ca. 0,3 mm dargestellt. Derartige Piezo-Elemente weisen im Ultraschallbereich die höchsten Wirkungsgrade auf und sind zudem relativ preiswert. Zentral auf der Piezoscheibe 42 ist ein trichterförmiger Konus 43 aufgeklebt, der die Schwingungsbewegungen der Piezoscheibe 42 an seiner Halsöffnung 44 mit dem Durchmesser d1 in Biegewellen umsetzt, die sich entlang seines Mantels 45 der Länge I in Richtung seiner Mundöffnung 46 (siehe auch Pfeile in Figur 6) ausbreiten. Eine Abstrahlung in die umgebende Luft erfolgt dann von der Mundöffnung 46 sowie der Halsöffnung 44. Je nach Dimensionierung des Konus 43 aus einem Papiermaterial, das durch eine Beschichtung mit einem Oxid feuchtigkeits- und temperaturunempfindlich ist, erreicht man eine effektive akustische Impedanzwandlung bei bestimmten Frequenzen, die im Extremfall zu einer einzigen Mittenfrequenz mit einem extrem hohen Schalldruck führen kann, neben der kaum noch Schall abgestrahlt wird. Experimentell wurden die Konusparameter in folgenden Wertebereichen optimiert : d1 : 2 bis 4 mm, d2 : 10 bis 14 mm, L : 5 bis 7 mm.

Über zwei Verklebungen 47,48 ist die Piezoscheibe 42 mit einem Abstand mit einer Bodenplatte 49 eines Wandlergehäuses 48 verbunden, bzw. im Gehäuse 48 dämpfungsarm aufgehängt. Die Wandung des Gehäuses 50 bildet ein Ring 51. Durch die Verklebungen 47,48 sind zwei Kontaktdrähte 52,53 zur Signalübertragung an die Piezoscheibe 42 herangeführt. Auch diese Verklebungen sind unempfindlich gegen Feuchtigkeit und hohe Temperaturen. Der Gehäuseaufbau sorgt für eine Verstärkung des Schallfeldes in den Bereichen, wo die Abstrahlung vom Konus 43 Minima aufweist. Der **Figur 6** (Draufsicht auf den Wandler ohne Gehäuse 50, nicht erwähnte Bezugszeichen siehe Figur 5)) ist zu entnehmen, daß der Konus 43 seitlich leicht abgeflacht (gerade oder oval) ist, was zu einer weiteren Glättung des Frequenzganges führt. Ein Betrieb mit einer maximalen Eingangsspannung von 30 V vermeidet Beschädigungen des Schwingungssystems 41 durch zu starke Auslenkungen.

## Patentansprüche

1. Einrichtung zur Abschreckung von tierischen Schädlingen durch Aussendung eines Ultraschallsignals, das eine Struktur aus einzelnen Tonsequenzen aufweist, mit
- einem programmgesteuerten Mikrocomputer zur Berechnung des Ultraschallsignals unter zufallsbeeinflußter Auswahl der berücksichtigten, mindestens vorgegebenen Signalparameter Tonfrequenz und Pausenlänge zwischen einzelnen Tonsequenzen,
- einem Digital-Analogwandler,
- einem Analogverstärker,
- zumindest einem Piezo-Ultraschallwandler,
- einer Programmreset-Einrichtung und mit
- einer Kontroll-Einrichtung zur Funktionsprüfung durch Übertragung des Ultraschallsignals in den für Menschen hörbaren Bereich,
**dadurch gekennzeichnet**, **daß**
- als weitere Signalparameter des Ultraschallsignals die jeweilige Tonlänge TL, die einzelne Tonsequenzlänge SL, der Strukturparameter SP, der sich aus der Differenz zwischen einer maximalen Tonlänge und einer minimalen Tonlänge einer Tonsequenz berechnet, und der Zufallsmodus bereichsweise vorgegeben sind,
- die Vorgabe der Signalparameter-Bereiche durch programminterne Berücksichtigung von externen Instruktionen aus einer einstellbaren Programmier-Schaltereinheit (14) erfolgt,
- das vom Mikrocomputer (3) berechnete Ultraschallsignal US programmintern in ein Rechteck-Ausgangssignal umgeformt und direkt dem Analogverstärker (15) zugeführt wird,
- der Analogverstärker (15) einen schnellen Operationsverstärker (31) aufweist, der die Basen zweier komplementärer Transistoren (33,34) in Emitterschaltung treibt und über diese rückgekoppelt ist,
- zwischen dem Analogverstärker (15) und dem Piezo-Ultraschallwandler (20,40) ein Frequenzfilter (19) angeordnet ist und daß
- der Piezo-Ultraschallwandler (20,40) als Schwingungssystem (41) einen piezokeramischen Dickenschwinger in Form einer kreisrunden Piezoscheibe (42) mit einem oberseitig zentral aufgeklebten trichterförmigen Konus (43) aus einem wasserfesten, oxidbeschichteten Papier aufweist, der eine Halsöffnung (44) mit einem Durchmesser d1 in einem Bereich von 2 bis 4 mm, eine Mundöffnung (46) mit einem Durchmesser d2 in einem Bereich von 10 bis 14 mm und einen Mantel (45) mit einer Länge L in einem Bereich von 5 bis 7 mm hat.

2. Einrichtung nach Anspruch 1,
**dadurch gekennzeichnet**, **daß**
die Mundöffnung (46) des Konus (43) zumindest annähernd oval ist.

3. Einrichtung nach Anspruch 1 oder 2,
**dadurch gekennzeichnet**, **daß**
das Schwingungssystem (41) in einem ringförmigen Gehäuse (50) durch Verklebungen (47,48) mit der Bodenplatte (49) des Gehäuses (50) dämpfungsarm aufgehängt ist.

4. Einrichtung nach einem der vorangehenden Ansprüche 1 bis 3,
**dadurch gekennzeichnet**, **daß**
das Ausgangssignal des Analogverstärkers (15) parallel zwei Piezo-Ultraschallwandlern (20,40) zugeführt wird, die nebeneinander mit einem Öffnungswinkel zueinander von ca. 20° in der horizontalen Ebene angeordnet sind.

5. Einrichtung nach einem der vorangehenden Ansprüche 1 bis 4,
**dadurch gekennzeichnet**, **daß**
die Programmreset-Einrichtung (13) auf jede auftretende Versorgungsstörung für den Mikrocomputer (3) automatisch reagiert.

6. Einrichtung nach einem der vorangehenden Ansprüche 1 bis 5,
**dadurch gekennzeichnet**, **daß**
die Kontroll-Einrichtung programmgesteuert aktiviert werden kann und die Übertragung automatisch nach Ablauf einer vorgegebenen Zeitspanne wieder aufgehoben wird.

7. Einrichtung nach einem der vorangehenden Ansprüche 1 bis 6,
**dadurch gekennzeichnet**, **daß**
die Kontroll-Einrichtung optische Kontrollmittel aufweist.

8. Einrichtung nach einem der vorangehenden Ansprüche 1 bis 7,
**dadurch gekennzeichnet**, **daß**
die Einrichtung (1) als Zentralstation in einem Gehäuse angeordnet ist, das ein ausgewölbtes Metallgitter an der Vorderseite, einen integrierten Montagebügel und seitlich herausgeführte Ausgangs-Steckverbinder sowie einen abgewinkelten Netzteilstecker an der Rückseite aufweist.

9. Einrichtung nach einem der vorangehenden Ansprüche 1 bis 8,
**dadurch gekennzeichnet, daß**
weitere Piezo-Ultraschallwandler (20,40) in von der Zentralstation jeweils räumlich getrennt angeordneten Satellitengehäusen mit ähnlichem Gehäuseaufbau vorgesehen sind.

10. Anlage aus zumindest zwei Einrichtungen nach einem der vorangehenden Ansprüche 1 bis 9,
**dadurch gekennzeichnet**, **daß**
die einzelnen Ultraschallsignale US zueinander desynchronisiert werden können durch eine programmgesteuerte, von der Programmreset-Einrichtung (13) ausgelöste zeitliche Verzögerung der jeweiligen zufallsbeeinflußten Wahl der Signalparameter.

11. Anlage nach Anspruch 10,
**dadurch gekennzeichnet, daß**
als weiterer Parameter der Desynchronisationgrad D über die Programmier-Schaltereinheit (14) einstellbar ist.

## Claims

1. A device for repelling pests by emiting an ultrasonic signal the structure of which is made of isolated tone sequences which includes :
- a program piloted microprocessor to calculate the ultrasonic signal with a randomised selection of the predetermined parameters of the signal taken into account such as the frequency of sound and the lengths of pauses between the different tone sequences
- a digital/analog transducer
- an analog amplifier
- one ultrasonic piezo-electric tweeter at least
- a programmed device for resetting
- an operational control device by transmission of the ultrasonic signal towards the human auditory area,
characterised in that
- additional parameters of the ultrasonic signal are predetermined by range of values, i.e. : tone length (TL), each duration of sound sequence (SL), the "structure" parameter (SP) which can be obtained by calculating the difference between the maximum and the minimum sound duration within a tone sequence and the random mode,
- the predetermination of the range of the signal parameters is made possible thanks to the transmission of user's instructions to a programmable switching unit (14);
- the ultrasonic signal (US) calculated by the microprocessor (3) is transformed within the program into a rectangular output signal directly sent towards the analog amplifier (15);
- the analog amplifier has a quick operational amplifier (31) which drives the bases of the two additional transistors (33,34) in a loop emitting circuit;
- a frequency filter (19) is put in between the analog amplifier (15) and the ultrasonic piezo-electric tweeter (20,40);
- the ultrasonic piezo-electric tweeter (20,40) which plays the role of an oscillating system, is made of a piezo-ceramic thickness oscillator which has the shape of a circular piezo disc (42) with a cone (43) having the shape of a funnel stuck on the upper central part and made of a sealing material plated with an oxide film with a d1 diameter neck opening (44) ranged between 2 to 4 mm, a cone orifice (46) of a d2 diameter ranged between 10 to 14 mm, and an envelop (45) of a L length ranged between 5 to 7 mm.

2. A device as claimed in any of claims 1 or 2
characterised in that the orifice (46) of the cone (43) is nearly oval.

3. A device as claimed in any of claims 1 or 2
characterised in that the oscillating system (41) is suspended in an low-muffled mode in a circular housing (50) thanks to sticking points (47,48) on the bottom plate of the housing.

4. A device as claimed in any of claims 1 to 3,
characterised in that the output signal of the analog amplifier (15) is sent to the ultrasonic piezo-electric tweeters (20,40) arranged at a horizontal level and oriented with an aperture angle of about 20°.

5. A device as claimed in any of claims 1 to 4
characterised in that the program reset device (13) automatically reacts to any disturbance at the power supply level for the microprocessor (3).

6. A device as claimed in any of claims 1 to 5
characterised in that the control device can be activated by the program and the transmission of the signal is automatically stopped after a predetermined delay.

7. A device as claimed in any of claims 1 to 6
characterised in that the control device shows an optical control means.

8. A device as claimed in any of claims 1 to 7
characterised in that the device (1) is fixed as a centralised station in a housing protected by a metallic front grid slightly curved, an integrated clamping bow, output side connectors and a power plug bent at a backwards angle.

9. A device as claimed in any of claims 1 to 8
characterised in that the device supplies other ultrasonic piezo-electric tweeters (20,40) included in separated housings and far from the centralised station, the said satellites offering a housing conception similar to the centralised housing.

10. Installation made of at least two devices as claimed in any of claims 1 to 9,
characterised in that the different ultrasonic US signals can be desynchronized one against the other thanks to a program piloted reset device triggering after a while the randomised selection of the signal parameters.

11. Installation as claimed in claim 10,
characterised in that the desynchronization degree D is adjustable as from the programmable switching unit (14).

## Revendications

1. Dispositif de dissuasion d'animaux nuisibles par l'émission d'un signal ultrasonore dont la structure est composée de séquences de sons isolés qui comprend :
- un microprocesseur programmé en vue du calcul du signal ultrasonore avec une sélection aléatoire des paramètres du signal pris en compte et prédéfinis, que sont la fréquence du son et la longueur des pauses entre les différentes séquences de sons ;
- un traducteur digital-analogique ;
- un amplificateur analogique ;
- au moins un transducteur à ultrasons piézoélectrique ;
- un dispositif de remise à zéro programmé et
- un dispositif de contrôle de fonctionnement par la traduction du signal ultrasonore dans le domaine audible pour l'homme
**caractérisé en ce que**
- des paramètres supplémentaires du signal ultrasonore sont prédéfinis par plages de valeurs, à savoir ; la durée du son TL, chaque durée de la séquence de sons SL, le paramètre 〈〈 structure 〉〉 SP qui s'obtient en calculant la différence entre la durée maximale et la durée minimale du son, à l'intérieur d'une séquence de sons, et le mode aléatoire.
- la prédéfinition des plages de paramètres du signal est rendue possible grâce à la transmission des instructions utilisateur à un bloc de commutation programmable (14) ;
- le signal ultrasonore US calculé par le microprocesseur (3) est transformé à l'intérieur du programme en un signal de sortie rectangulaire et envoyé directement vers l'amplificateur analogique (15) ;
- l'amplificateur analogique dispose d'un amplificateur opérationnel rapide (31) qui entraîne les bases de deux transistors complémentaires (33, 34) en circuit d'émetteur en boucle ;
- un filtre de fréquences (19) est placé entre l'amplificateur analogique (15) et le transducteur à ultrasons piézo-électrique (20, 40) ; et
- le transducteur à ultrasons piezo-électrique (20, 40), qui fait office de système d'oscillation, est composé d'un oscillateur d'épaisseur piézocéramique sous forme d'un disque piézo rond (42) avec un cône (43) en forme d'entonnoir collé sur la partie centrale supérieure et réalisé à partir d'un matériau étanche à l'eau, recouvert d'oxyde, avec une ouverture de col (44) d'un diamètre d1, compris entre 2 à 4 mm, un orifice (46) d'un diamètre d2, compris entre 10 à 14 mm, et une enveloppe (45) d'une longueur L comprise entre 5 à 7 mm.

2. Dispositif selon la revendication 1,
**caractérisé en ce que**
l'orifice (46) du cône (43) est au moins presque oval .

3. Dispositif selon les revendications 1 ou 2,
**caractérisé en ce que**
le système d'oscillation (41) est suspendu en mode amorti, dans un boîtier rond (50) grâce à des points de collage (47,48) sur la platine du fond (49) du boîtier (50).

4. Dispositif selon l'une des revendications 1 à 3 précédentes,
**caractérisé en ce que**
le signal de sortie de l'amplificateur analogique (15) est envoyé à deux transducteurs à ultrasons piézoélectriques (20, 40) disposés dans un plan horizontal côte à côte avec un angle d'ouverture d'env. 20°.

5. Dispositif selon l'une des revendications 1 à 4 précédentes,
**caractérisé en ce que**
le dispositif de remise à zéro du programme (13) réagit de façon automatique à tout problème d'alimentation au niveau du microprocesseur (3).

6. Dispositif selon l'une des revendications 1 à 5 précédentes,
**caractérisé en ce que**
le dispositif de contrôle peut être activé par le programme de commande, et en ce que la traduction du signal est automatiquement suspendue après un délai prédéfini.

7. Dispositif selon l'une des revendications 1 à 6 précédentes,
**caractérisé en ce que**
le dispositif de contrôle présente des moyens de contrôle optique.

8. Dispositif selon l'une des revendications 1 à 7 précédentes,
**caractérisé en ce que**
le dispositif (1) est placé en tant que station centralisée dans un boîtier protégé par une grille métallique légèrement courbe à l'avant, un étrier de fixation intégré, des connecteurs latéraux de sortie et une prise d'alimentation secteur coudée à l'arrière.

9. Dispositif selon l'une des revendications 1 à 8 précédentes,
**caractérisé en ce que**
le dispositif prévoit d'autres transducteurs à ultrasons piézoélectriques (20, 40) contenus dans des boîtiers séparés et éloignés de la station centralisée dont les satellites présentent une construction de boîtier similaire.

10. Installation composée d'au moins deux des dispositifs selon l'une des revendications 1 à 9 précédentes,
**caractérisé en ce que**
les différents signaux ultrasonores US peuvent être désynchronisés les uns par rapport aux autres grâce à une temporisation de chaque sélection aléatoire des paramètres du signal; cette temporisation étant déclenchée par le dispositif de remise à zéro et commandée par le programme.

11. Installation selon la revendication 10,
**caractérisé en ce que**
comme paramètre supplémentaire, le degré de désynchronisation D est réglable à partir du bloc de commutation de programmable (14).
